(19) Europäisches Patentamt

European Patent Office

Office européen des brevets

(11) **EP 0 546 618 B1**

(12) **EUROPEAN PATENT SPECIFICATION**

(45) Date of publication and mention
of the grant of the patent:
**01.04.1998   Bulletin 1998/14**

(51) Int Cl.6: **G06F 1/10**

(21) Application number: **92203747.8**

(22) Date of filing: **03.12.1992**

(54) **Circuit arrangement comprising a plurality of sub-circuits and clock signal regeneration circuits**

Schaltungsanordnung mit einer Mehrzahl von Teilschaltkreisen und Taktregenerierungsschaltungen

Agencement de circuit ayant une pluralité de sous-circuits et circuits de régénération de signal d'horloge

(84) Designated Contracting States:
**DE FR GB IT NL**

(30) Priority: **09.12.1991 EP 91203207**

(43) Date of publication of application:
**16.06.1993   Bulletin 1993/24**

(73) Proprietor: **Philips Electronics N.V.**
**5621 BA Eindhoven (NL)**

(72) Inventor: **Van de Wiel, Petrus Josephus Adrianus Maria**
**NL-5656 AA Eindhoven (NL)**

(74) Representative: **de Haas, Laurens Johan et al**
**INTERNATIONAAL OCTROOIBUREAU B.V.,**
**Prof. Holstlaan 6**
**5656 AA Eindhoven (NL)**

(56) References cited:
- **IEEE COMPUTER SOCIETY PRESS - PROCEEDINGS OF INTERNATIONAL CONFERENCE ON WAFER SCALE INTEGRATION, JAN.23-25,90, SAN FRANCISCO, CA, US pages 85 - 91 , XP130673 ROBERT W.HORST 'A Linear-Array WSI Architecture for Improved Yield and Performance'**

# Description

The invention relates to a circuit arrangement comprising a plurality of sub-circuits for data processing, each of the sub-circuits being provided with a respective clock-input, for synchronizing the operation of the sub-circuits with each other, at least one sub-circuit being provided with a clock-output, the clock-input and the clock-output of the at least one sub-circuit having a coupling *via* the at least one sub-circuit, the clock output of the at least one sub-circuit being coupled to the respective clock input of another sub-circuit. In the frame of the present description with data processing is meant the handling of any type of data, independent of the associated information content or the way the information is represented.

Such a circuit arrangement is known from an article by Robert W. Horst titled "A linear array WSI architecture for improved yield and performance" in the 1990 proceedings of the international conference on wafer scale integration (IEEE computer society press) pages 85 to 91. This document describes a circuit composed of sub-circuits. Each sub-circuit receives synchronisation clock information not from a central clock, but from a clock output of a data processing sub-circuit. The clock signals and the signals representing the processed data pass in parallel from one sub-circuit to a next one. Synchronisation is a matter of making sure that the clock signals that pass from one sub-circuit to the next, *via* an interconnect, are subject to an equal delay and to equal disturbances as the data signals. This can be realised relatively easy by making the interconnects for the clock and the data signals as much as possible alike.

When the clock signal pass from one sub-circuit to another, its shape may gradually deteriorate. "High" and "low" periods may exhibit some transients, rising and falling edges may be more gradual and, in particular, the duty cycle may be increased or decreased. Due to more gradual edges the change in duty cycle will be even more prominent.

The deterioration of the clock signal while traversing one or more sub-circuits poses serious limits on the length of the chain of sub-circuits. Deterioration of the pulses is significant in high frequency applications wherein the wavelength of the clock and data signals is comparable with the length of the interconnect between the sub-circuits. In this case the circuit arrangement may fail.

It is, *inter alia,* an object of the invention to provide a circuit arrangement according to the introductory paragraph in which the synchronisation of sub-circuits relative to one another is obtained without the need to provide a synchroniser for each sub-circuit or integrated circuit chip and that can operate properly in a range of frequencies, several orders of magnitude wide, up to the maximum frequency allowed by the integration technology.

To this end, the circuit arrangement according to the invention is characterised in that the coupling *via* the at least one sub-circuit comprises a clock signal regeneration circuit comprising

- a set of two input terminals for a first and second input clock signal, respectively, received from the clock-input of the at least one sub-circuit,
- a set of two output terminals for a first and second output clock signal, respectively, transmitted to the clock-output of the at least one sub-circuit,
- detection means for detecting occurrence of a first edge in the first input clock signal and occurrence of a second edge in the second input clock signal, the first and second edges being of the same type, rising or falling,
- pulse generation means for generating a rising edge in the first and a falling edge in the second output clock signal in response to detection of the occurrence of the first edge and for generating a falling edge in the first and a rising edge in the second output clock signal in response to detection of the occurrence of the second edge.

The deterioration of the clock pulses due to traversing the interconnect is to be repaired by such a regeneration circuit. The deterioration of the clock signals while traversing the interconnect will influence mainly the shape and duty cycle and the position of the edges but will not influence the frequency. The occurrence of certain characteristic features in one of the clock signals can be used to trigger the generation of a new clock pulse, whereas the occurrence of a feature in another clock signal is to be used to determine further parameters of the pulse, such as pulse-length or the duty cycle of the clock signal. As the frequency is not influenced, regeneration of clock signals can be obtained without programming the regeneration circuits to a particular shape or length of the clock pulses. Only one type of regeneration circuit suffices in the whole chain of sub-circuits which contributes to ease of design and a modular architecture of the circuit arrangement.

If the input clock signals are approximately each others inverted signal and the edges of the output clock signals are generated with a delay that is substantially equal, the output clock signals are approximately each others inverted signals as well. Regeneration of clock signals occurs then without the need of special delay circuits or some kind of local knowledge in the regeneration circuit about the desired pulse shape. The timing circuitry of the circuit arrangement can be made relatively simple and reliable. The only condition remaining is that the propagation of the two clock signals through the sub-circuit takes the same time interval. This can be ensured by accurate dimensions of the relevant circuit elements.

An embodiment of the circuit arrangement according to the invention is characterized, in that the pulse generation means comprise a flip-flop, the pulse generation means being arranged for setting and resetting said flip-flop in response to detection of the occurrence of the first and second edges respectively, complementary outputs of said flip-flop being coupled to the two output terminals of the clock regeneration circuit. This provides a simple implementation of the regeneration according to the invention.

A circuit arrangement in accordance to the invention is further characterised in that the plurality of sub-circuits forms a chain of sub-circuits for data processing, each sub-circuit in the chain comprising a data output coupled to a data input of a next sub-circuit and each sub-circuit in the chain comprising a clock output coupled to a clock input of the next sub-circuit. The clock signals are guided in parallel with the data to be processed through the chain of sub-circuits. Synchronisation along the chain is optimised.

The circuit arrangement according to the invention is particularly advantageous in applications using integrated circuits for high frequency data processing. One or several sub-circuits for data processing and associated regeneration circuitry may be integrated on a single semiconductor integrated circuit chip. When several sub-circuits are integrated on one chip, clock signals are passed between different portions and regenerated at several places of this chip.

The invention also relates to an integrated circuit for application in such a circuit arrangement. According to the invention such an integrated circuit comprises at least one sub-circuit for data processing and at least one clock signal regeneration circuit.

These and other, more detailed aspects of the invention will now be elucidated by way of example with reference to the accompanying drawings.

Figure 1 shows diagrammatically a circuit arrangement according to the invention;
Figure 2 illustrates a possible deterioration of clock pulses;
Figure 3 shows a circuit to restore the clock pulses;
Figure 4 shows diagrammatically an embodiment of a clock signal regeneration circuit using more then one input signal;
Figure 5 shows a few timing diagrams of clock signals in the circuit of Figure 4 to illustrate the working of this circuit;
Figure 6 shows diagrammatically another embodiment of a clock signal regeneration circuit; and
Figure 7 illustrates a chain of sub-circuits with intermediate sets of regeneration circuits.

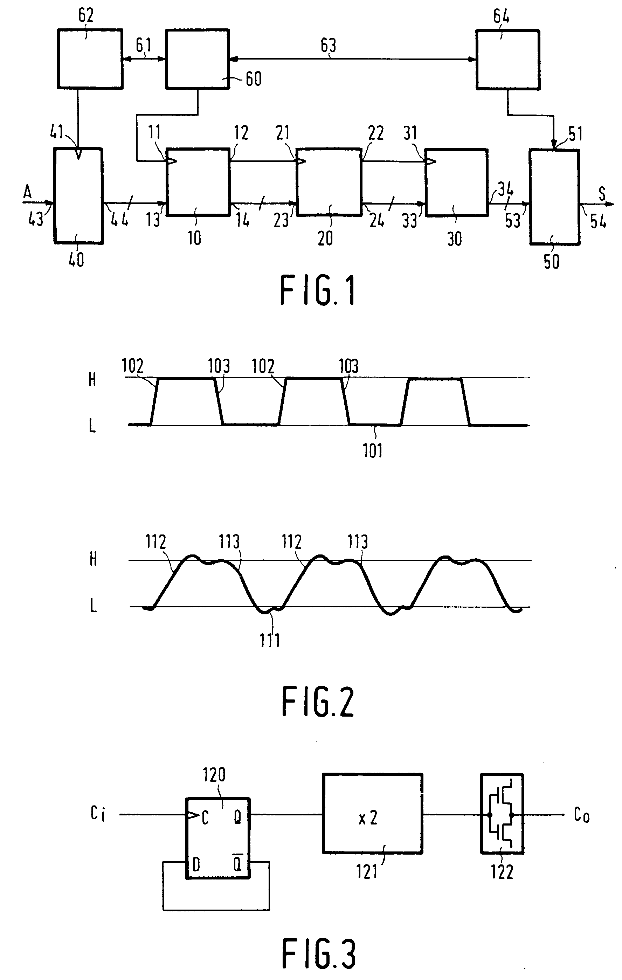

Figure 1 shows a circuit arrangement for information processing. The circuit arrangement shown comprises three sub-circuits 10, 20 and 30, an entrance circuit 40 and an exit circuit 50. By way of example, the circuit arrangement may consist of a decoder 10, a logic processor 20 and an encoder 30. The entrance circuit 40 is, for example, an analog to digital convertor and the exit circuit 50 a parallel to serial convertor. Each of the sub-circuits may be implemented on a separate integrated circuit with or without attached discrete components, or even comprise a few integrated circuits. Alternatively, two or more of the sub-circuits may be integrated on a single integrated circuit.

An information signal A is input to a data entrance 43 of the entrance circuit 40. After preprocessing, in the example conversion of an analog signal into a digital signal, the information signal is passed to the sub-circuit 10, *via* its data input 13. The information is subsequently processed by this sub-circuit, in the assignment of the example the coding of the data is changed from the format generated by the analog-to-digital convertor to a format digestible by the logic processor, and passed to the next sub-circuit 20 *via* the data output 14 and the data input 23. After processing in this sub-circuit, *i.e.* performing certain logic and arithmetic operations upon the data, the processed data are passed to a last sub-circuit 30. In the given task assignment of the sub-circuits the coding format of the digital data is changed again and the coded data are output in parallel at the data output 34 connected to an input 53 of the exit circuit 50. In the exit circuit 50 the processed data are buffered and subsequently become available at the serial output 54 as a serial information signal S.

The entrance and exit circuits 40 and 50 receive timing signals that are synchronised with the frequency at which the sub-circuits 10, 20 and 30 operate. The additional timing signals for the entry and exit circuits are generated in pulse generators 62 and 64 and synchronisation between these pulse generators and the system clock 60 is, for example, assured by connections 61 and 63. The three sub-circuits 10, 20 and 30 are all operating at the same frequency, the clock signals being derived from system clock 60 and presented to each of the sub-circuits 10, 20 and 30 *via* clock inputs 11, 21 and 31, respectively.

According to the invention not each of these clock inputs are connected to a clock output of the system clock 60, only the clock input 11 of the first sub-circuit 10 is. The clock inputs of the downstream sub-circuits 20 and 30 are each coupled to a clock output 12 and 22 of the previous sub-circuits 10 and 20, respectively. The clock outputs 12 and 22 of the sub-circuits 10 and 20 are coupled by a path through the sub-circuits to the clock inputs 11 and 21, respectively. Consequently, synchronisation of the downstream circuits 20 and 30 is achieved. As the clock signal flows in parallel with the data signals separate synchronisers and tuning thereof is unnecessary.

In Figure 2 a possible behaviour of the clock pulses while traversing an interconnect between two sub-circuits is illustrated. In the Figure, "H" indicates the "high" level and "L" the "low" level of a signal. The input clock signal 101, shown in the upper portion of the Figure, consists of pulses with steep rising and falling edges 102, 103 and a duty cycle of about 50%, *i.e.* the length of the "high" period of the signal is approximately equal to the length of the "low" period. In the lower portion of the Figure, a possible signal shape 111 is shown after traversing an interconnect. The "high" and "low" periods in the signal exhibit some transients, the rising and falling edges 112, 113 may be more gradual and, in particular, the duty cycle may be increased or decreased. Due to more gradual edges the change in duty cycle will be even more prominent.

The deterioration of the clock signal while traversing one or more sub-circuits poses serious limits on the length of the chain of sub-circuits. In particular, in a high frequency application, where a period of the clock signal has a length comparable to the time needed to traverse a sub-circuit or to traverse the interconnect between sub-circuits, the system will fail. In Figures 3 an example of a circuit arrangement is shown in which the clock signal at the end of an interconnect is regenerated. The regeneration circuit shown comprises an edge triggered frequency divider 120, by way of example is shown a D-flip-flop switched as a frequency divider by connecting the $\overline{Q}$-output to the D-input, followed by a frequency multiplier 121, for example a phase locked loop, and a pulse shaper 122. In an alternative embodiment, the frequency multiplier is triggered by the rising edges of the clock signal pulses and followed by a frequency divider.

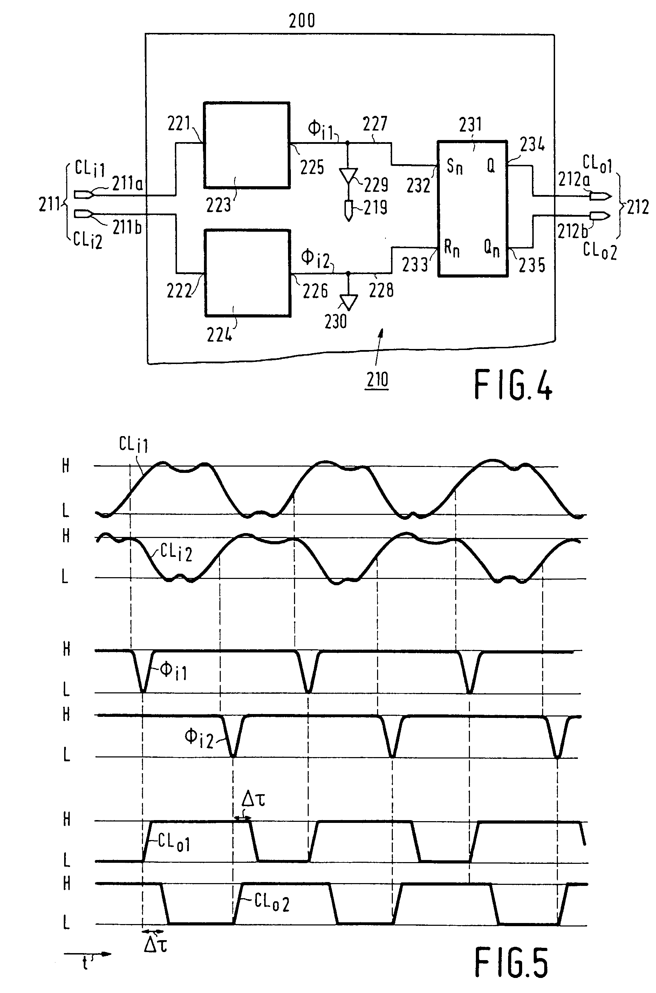

In Figure 4 an implementation of a preferred embodiment is diagrammatically shown. An integrated circuit 200 comprises a clock input 211 having two clock input terminals 211a and 211b for receiving two distinct clock signals of the same frequency. The integrated circuit comprises a multitude of further terminals, bonding pads or pinouts, not shown, for voltage supply, control signals, data input and output. The two clock input terminals are connected to the inputs 221, 222 of first and second internal pulse generators 223 and 224, respectively. Each of these internal pulse generators 223 and 224 generates clock pulses $\phi_{i1}$ en $\phi_{i2}$ for internal use in the circuitry of the integrated circuit 200 or in a portion of the same.

The outputs 225 and 226 at which the clock pulses $\phi_{i1}$ and $\phi_{i2}$ become available are coupled via connections 227 and 228 to the set ($S_n$) and reset ($R_n$) inputs of an RS-flip-flops 231. The connections between the pulse generators and the RS-flip-flop may contain buffers or other circuitry. In the connection 227 from the first internal pulse generator 223 to the RS-flip-flop a tap 219 for the internal clock pulses $\phi_{i1}$ is provided to guide the pulse to the data processing portion of the circuit or sub-circuit. The tap 219 is coupled to the connection 227 via a buffer circuit 229. In the other connection 228, between the second internal pulse generator 224 and the RS-flip-flop, an equivalent buffer circuit 230 is added as a dummy load for achieving symmetry between the two connections 227 and 228. If the clock pulses $\phi_{i2}$ from the second internal pulse generator 224 are not used in the sub-circuit, the buffer circuit 230 is present but has its output not connected. Additional taps may be provided at the same or at the other connection.

Output 225 of the first internal pulse generator 223 is coupled to the $S_n$-input 232 of the RS-flip-flop 231 and output 226 of the second internal pulse generator 224 is coupled to the $R_n$-input 233. The Q- and $Q_n$-outputs 234 and 235 of the RS-flip-flop are coupled to the clock output terminals 212a and 212b, respectively, of the clock output 212 of the circuit. In between the Q- and $Q_n$-outputs and the output terminals 212a and 212b a series of buffers may be arranged. The arrangement of internal pulse generators 223, 224 and RS-flip-flops 231 forms a clock signal regeneration circuit 210 from which a clock pulse for the sub-circuit 200 is derived via a tap 219.

The clock regeneration circuit 210 as described above works as follows. As a starting point it is assumed that the circuit is in a stage during normal operation in which the Q-output 234 of the RS-flip-flop 231 is "low" and the $Q_n$-output 235 is "high". When a rising edge of a clock input signal arrives at input 221 of the first internal pulse generator 223, the latter generates a pulse $\phi_{i1}$ at its output 225. Alternatively, the pulse generator may be triggered by the occurrence of a falling edge. The pulse $\phi_{i1}$ serves to clock the circuit. The pulse $\phi_{i1}$ is also transmitted to the $S_n$ input 232 of the RS-flip-flop 231, consequently the Q-output of the RS-flip-flop 231 will go "high" and the $Q_n$-output 235 will go "low". When a rising edge arrives at the input 222 of the second internal pulse generator 224 a pulse $\phi_{i2}$ is generated that is transferred to the $R_n$-input of the RS-flip-flop 231. Consequently, the states of the Q-and $Q_n$-outputs are reversed, i. e. the Q-output 234 will go "low" and the $Q_n$-output 235 will go "high". Due to the internal structure of an RS-flip-flop more time is needed after the arrival of a pulse at the $S_n$-input for the $Q_n$-output to change state then for the Q-output to change state, and vice versa when a pulse arrives at the $R_n$-input. Because of this behaviour the output clock signals generated have a duty cycle which deviates from 50%.

When the RS-flip-flop used is symmetrical in the sense that the delays between a pulse arriving at the $S_n$-input till the changes of states of the Q- and $Q_n$-outputs, respectively, are equal to the delays between a pulse arriving at the $R_n$-input till the changes of states of the $Q_n$- and Q-outputs, respectively, the signals at the Q- and $Q_n$-outputs can be used directly as clock signals. However, due to the above mentioned internal structure of the RS-flip-flop, these clock signals will not have a 50% duty cycle and, consequently, they will not be exactly each others inverted signals.

The outputs 225 and 226 at which the clock pulses $\phi_{i1}$ and $\phi_{i2}$ become available are coupled via connections 227 and 228 to the set and reset inputs of the RS-flip-flop 231, respectively. When the delay from the arrival of a rising edge at input terminal 211a till the moment the level at output terminal 212a changes is almost identical to the corresponding delay from input terminal 211b till output terminal 212b, the phase difference be-

tween the clock signals $CL_{i1}$ and $CL_{i2}$ at the respective input terminals is transferred to the clock signals $CL_{o1}$ and $CL_{o2}$ at the respective output terminals. By a well-designed lay-out together with accurate dimensions of the regeneration circuitry, it is very well possible to achieve such conservation of the phase difference. It is remarked that in the circuit the frequency and the phase difference of the input clock signals is fully maintained also when the actual shape and duty cycle of the clock signals deteriorates in approximately the same manner, during transfer between regeneration circuits. The signal paths for the clock signals, and also for data signals, should be as much alike as possible.

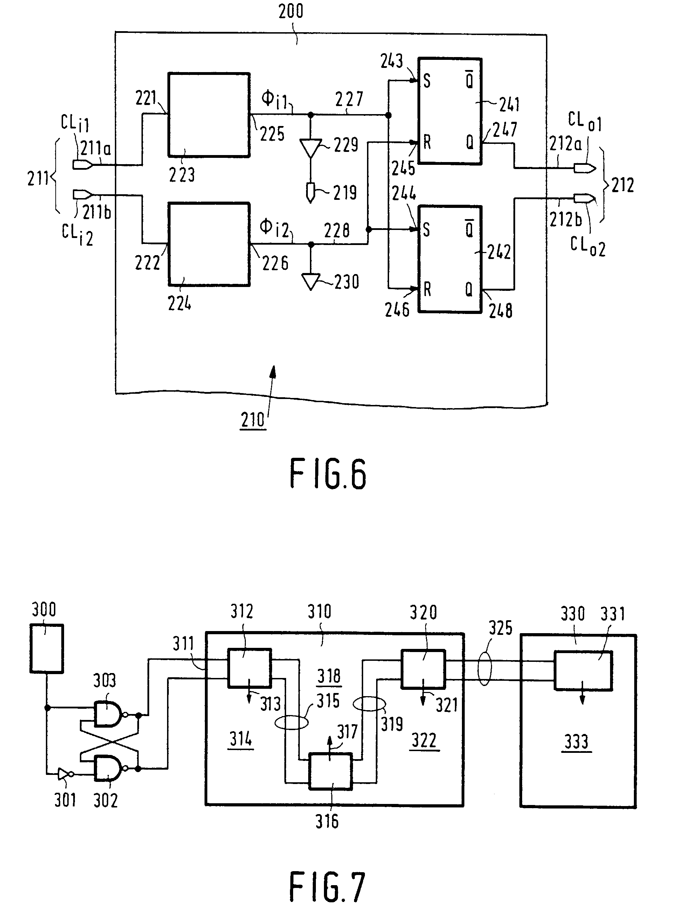

In Figure 5 pulse shapes are shown at various points in the circuit described with reference to Figure 4. The horizontal axis in the Figure represents time t. The two upper curves $CL_{i1}$ and $CL_{i2}$ represent possible clock signal shapes at the inputs 221 and 222 of the first and second internal pulse generators 223 and 224. As both clock signals started from similar pulse generators in an earlier circuit and have traversed identical interconnects, the pulse shapes of the two clock signals is largely identical. In the internal pulse generators 223 and 224 pulses $\phi_{i1}$ and $\phi_{i2}$ are generated, shown in the middle two curves. The timing of pulses $\phi_{i1}$ is synchronised with a point in the rising edges in clock signal $CL_{i1}$ and the timing of pulses $\phi_{i2}$ is synchronised with similar points in the clock signal $CL_{i2}$. Finally the lower two curves show the first and second output clock signals $CL_{o1}$ and $CL_{o2}$, available at the output clock terminals 212a and 212b. The rising edges of the first output clock signal $CL_{o1}$ are synchronised with the pulses $\phi_{i1}$, the falling edges with the pulses $\phi_{i2}$. The second output clock signal $CL_{o2}$ is synchronised the other way around, the rising edges are triggered by pulses $\phi_{i2}$, the falling edges by pulses $\phi_{i1}$. The delays, indicated in the Figure with $\Delta\tau$, represent the difference in time between the switching of the $Q_n$-output and the Q-output in a flip-flop after a pulse arrives at the $R_n$-input and the corresponding difference in time between switching of the Q- and $Q_n$-outputs after a pulse arrives at the $S_n$-input. As shown in Figure 5, this leads to output clock pulses of which the duty cycle deviates from 50%.

With the above described embodiment a better clock output signal, in term of steepness of the edges, length of the "high" and/or "low" periods, response time at the R- or S-inputs, or duty-cycle, can be obtained at a high operation frequency, at one of both outputs. However, the performance of the other output is then reduced and symmetry between the two outputs is lost. To maintain symmetry, for example to achieve a 50% duty cycle, two identical flip-flops have to be used. Such an embodiment is illustrated in Figure 6 which is identical to Figure 4 with the exception of the two RS-flip-flops 241 and 242 replacing the single flip-flop 231 in that Figure. Identical reference signs are used for elements common with elements in Figure 4 and no description is given here for those elements. Reference is made to the description of Figure 4 for further details concerning those elements.

Output 225 of the first internal pulse generator 223 is coupled to the S-input 243 of the first RS-flip-flop 241 and to the R-input 246 of the second RS-flip-flop 242. Output 226 of the second internal pulse generator 224 is coupled to the S-input 244 of the second RS-flip-flop 242 and to the R-input 245 of the first RS-flip-flop 241. The Q-outputs 247 and 248 of the two RS-flip-flops are coupled to the clock output terminals 212a and 212b, respectively, of the clock output 212 of the circuit.

This embodiment of a clock regeneration circuit works as follows. Again, as a starting point it is assumed that the Q-output of the first RS-flip-flop 241 is "low" and the Q-output of the second RS-flip-flop 242 is "high". When a rising edge of a clock input signal arrives at input 221 of the first internal pulse generator 223, the latter generates a pulse $\phi_{i1}$ at its output 225. The pulse $\phi_{i1}$ serves to clock the circuit and is also transmitted to the S input of the first RS-flip-flop 241 and to the R-input of the second RS-flip-flop 242. Consequently, the Q-output of the first RS-flip-flop 241 will go "high" and that of the second RS-flip-flop 242 will go "low". When a rising edge arrives at the input 222 of the second internal pulse generator 224 a pulse $\phi_{i2}$ is generated that is transferred to the R-input of the first RS-flip-flop 241 and to the S-input of the second RS-flip-flop 242. Consequently, the states of the Q-outputs of both RS-flip-flops are reversed, i.e. the Q-output of the first RS-flip-flop 241 will go "low" and that of the second RS-flip-flop 242 will go "high".

This embodiment can also be used to achieve a 50% duty cycle when the RS-flip-flops are not symmetrical in the sense that the delays between a pulse arriving at the S-input till the changes of states of the Q- and $\overline{Q}$-outputs, respectively, are equal to the delays between a pulse arriving at the R-input till the changes of states of the $\overline{Q}$- and Q-outputs, respectively.

In Figure 7 two integrated circuits 310 and 330 are shown in cascade. For simplicity, only connections relevant for the clock signals are illustrated, data and power connections are not shown. The two integrated circuits 310 and 330 are clocked with a system clock 300 which generates clock pulses. The clock pulses are provided to a first input of a first NAND-gate 303 and, after inversion in an invertor 301, to a first input of a second NAND-gate 302. The second inputs of both NAND-gates are connected to the outputs of the other NAND-gate, thereby inhibiting both outputs to be "high" at the same time. The output signals of both NAND-gates are input to clock input terminals 311 of the first integrated circuit 310. The signals are regenerated by a clock regeneration circuit 312, from an output 313 of which a clock signal is tapped to synchronise a first data processing sub-circuit 314 in the integrated circuit 310.

The clock outputs of the first regeneration circuit are connected to clock inputs of a second clock regeneration circuit 316 on the same integrated circuit, via an on-chip interconnect 315. A tap 317 at this second clock regeneration circuit 316 is provided to clock a second sub-circuit 318. As illustrated in the embodiment shown, the integrated circuit 310 comprises a third regeneration circuit 320 and a third data processing sub-circuit 322. The latter is synchronised from the third clock regeneration circuit *via* a tap 321. The inputs of the third clock regeneration circuit 320 are coupled to the outputs of the second clock regeneration circuit 316 *via* on-chip interconnect 319.

The clock outputs of the third regeneration circuit 320 are coupled, *via* an off-chip interconnect 325, to the clock input terminals of a second integrated circuit 330. This second integrated circuit comprises, for example, only one data processing circuit 333 and one clock regeneration circuit 331.

## Claims

1. Circuit arrangement comprising a plurality of sub-circuits (10, 20, 30) for data processing, each of the sub-circuits (10, 20, 30) being provided with a respective clock-input (11, 21, 31), for synchronizing the operation of the sub-circuits with each other, at least one sub-circuit (10) being provided with a clock-output (12), the clock-input (11) and the clock-output of the at least one sub-circuit (10) having a coupling *via* the at least one sub-circuit (10), the clock output (12) of the at least one sub-circuit (10) being coupled to the respective clock input (21) of another sub-circuit, characterised, in that the coupling *via* the at least one sub-circuit (10) comprises a clock signal regeneration circuit (120-122) comprising

    -   a set of two input terminals (211a, 211b) for a first and second input clock signal, respectively, received from the clock-input (11) of the at least one sub-circuit (10),
    -   a set of two output terminals (212a, 212b) for a first and second output clock signal, respectively, transmitted to the clock-output (12) of the at least one sub-circuit (10),
    -   detection means (223, 224) for detecting occurrence of a first edge in the first input clock signal and occurrence of a second edge in the second input clock signal, the first and second edges being of the same type, rising or falling;
    -   pulse generation means (231, 241, 242) for generating a rising edge in the first and a falling edge in the second output clock signal in response to detection of the occurrence of the first edge and for generating a falling edge in the first and a rising edge in the second output clock signal in response to detection of the occurrence of the second edge.

2. Circuit arrangement according to Claim 1, characterised in that the pulse generation means (231, 241, 242) comprise a flip-flop (231), the pulse generation means (231, 241, 242) being arranged for setting and resetting said flip-flop (231) in response to detection of the occurrence of the first and second edges respectively, complementary outputs of said flip-flop (231) being coupled to the two output terminals (212a, 212b) of the clock regeneration circuit (210).

3. Circuit arrangement according to Claim 1 or 2, characterised in that the plurality of sub-circuits forms a chain of sub-circuits for data processing (10, 20), each sub-circuit in the chain comprising a data output (14, 24) coupled to a data input (23, 33) of a next sub-circuit (20, 30) and each sub-circuit in the chain (10, 20) comprising a clock output (12, 22) coupled to a clock input (21, 31) of the next sub-circuit.

4. Circuit arrangement according to Claim 1, characterised in that the at least one sub-circuit (323), the detection means and the pulse generation means are integrated on a single semiconductor integrated circuit (320).

5. Circuit arrangement according to Claim 4, characterised in that a plurality of sub-circuits (314, 318, 322) and clock signal regeneration circuits (312, 316, 320) are integrated on a single integrated circuit (310).

6. Integrated circuit suitable for application in a circuit arrangement according to any one of the Claims 1 to 5, the integrated circuit comprising the at least one sub-circuit for data processing, the detection means and the pulse generation means.

## Patentansprüche

1. Schaltungsanordnung mit einer Vielzahl Teilschaltungen (10, 20, 30) zur Datenverarbeitung, wobei jede der Teilschaltungen (10, 20, 30) mit einem jeweiligen Takteingang (11, 21, 31) versehen ist, um den Betrieb der Teilschaltungen (10, 20, 30) untereinander zu synchronisieren, wobei zumindest eine Teilschaltung (10) mit einem Taktausgang (12) versehen ist, wobei der Takteingang (11) und der Taktausgang (12) der zumindest einen Teilschaltung (10) über die zumindest eine Teilschaltung (10) eine Kopplung haben, wobei der Taktausgang (12) der zumindest einen Teilschaltung (10) mit dem jeweiligen Takteingang (21) einer anderen Teilschaltung gekoppelt ist, dadurch gekennzeichnet, daß die Kopplung über die zumindest eine Teilschaltung (10) eine Taktsignalregenerationsschaltung (120-122) umfaßt mit

- einem Satz von zwei Eingangsanschlüssen (211a, 211b) für ein erstes bzw. ein zweites Eingangstaktsignal, das vom Takteingang (11) der zumindest einen Teilschaltung aus empfangen worden ist,
- einem Satz von zwei Ausgangsanschlüssen (212a, 212b) für ein erstes bzw. ein zweites Ausgangstaktsignal, das zum Taktausgang (12) der zumindest einen Teilschaltung übertragen worden ist,
- Detektionsmitteln (223, 224) zum Detektieren des Auftretens einer ersten Flanke in dem ersten Eingangstaktsignal und des Auftretens einer zweiten Flanke in dem zweiten Eingangstaktsignal, wobei die erste und die zweite Flanke von gleichen Typ sind, ansteigend oder abfallend;
- Impulsgenerierungsmitteln (231, 241, 242) zum Generieren einer ansteigenden Flanke in dem ersten und einer abfallenden Flanke in dem zweiten Ausgangstaktsignal in Reaktion auf eine Detektion des Auftretens der ersten Flanke und zum Generieren einer abfallenden Flanke in dem ersten und einer ansteigenden Flanke in dem zweiten Ausgangstaktsignal in Reaktion auf eine Detektion des Auftretens der zweiten Flanke.

2. Schaltungsanordnung nach Anspruch 1, dadurch gekennzeichnet, daß die Impulsgenerierungsmittel (231, 241, 242) einen Flipflop (231) umfassen, wobei die Impulsgenerierungsmittel (231, 241, 242) zum Setzen und Rücksetzen dieses Flipflops (231) in Reaktion auf eine Detektion des Auftretens der ersten bzw. der zweiten Flanke angeordnet sind, wobei komplementäre Ausgänge des genannten Flipflops (231) mit den beiden Ausgangsanschlüssen (212a, 212b) der Taktregenerationsschaltung (210) gekoppelt ist.

3. Schaltungsanordnung nach Anspruch 1 oder 2, dadurch gekennzeichnet, daß die Vielzahl Teilschaltungen eine Kette aus Teilschaltungen zur Datenverarbeitung (10, 20) bilden, wobei jede Teilschaltung in der Kette einen mit einem Dateneingang (23, 33) einer folgenden Teilschaltung (20, 30) gekoppelten Datenausgang (14, 24) umfaßt und jede Teilschaltung in der Kette (10, 20) einen mit einem Takteingang (21, 31) der folgenden Teilschaltung gekoppelten Taktausgang (12, 22) umfaßt.

4. Schaltungsanordnung nach Anspruch 1, dadurch gekennzeichnet, daß zumindest eine Teilschaltung (323), die Detektionsmittel und die Impulsgenerierungsmittel auf einer einzigen integrierten Halbleiterschaltung (320) integriert worden sind.

5. Schaltungsanordnung nach Anspruch 4, dadurch gekennzeichnet, daß eine Vielzahl von Teilschaltungen (314, 318, 322) und Taktsignalregenerationsschaltungen (312, 316, 320) auf einer einzigen integrierten Schaltung (310) integriert worden sind.

6. Integrierte Schaltung, die zur Verwendung in einer Schaltungsanordnung nach einem der Ansprüche 1 bis 5 geeignet ist, wobei die integrierte Schaltung zumindest eine Teilschaltung zur Datenverarbeitung, die Detektionsmittel und die Impulsgenerierungsmittel umfaßt.

## Revendications

1. Agencement de circuit comprenant une pluralité de sous-circuits (10, 20, 30) pour le traitement de données, chacun des sous-circuits (10, 20, 30) étant muni d'une entrée d'horloge respective (11, 21, 31) pour synchroniser le fonctionnement des sous-circuits les uns avec les autres, au moins un sous-circuit (10) étant muni d'une sortie d'horloge (12), l'entrée d'horloge (11) et la sortie d'horloge (12) dudit au moins un sous-circuit (10) étant couplées via ledit au moins un sous-circuit (10), la sortie d'horloge (12) dudit au moins un sous-circuit (10) étant couplée à l'entrée d'horloge (21) respective d'un autre sous-circuit, caractérisé en ce que le couplage via ledit au moins un sous-circuit (10) comprend un circuit de régénération de signal d'horloge (120-122) comprenant

- un jeu de deux broches d'entrée (211a, 211b) respectivement pour un premier et un deuxième signal d'horloge d'entrée reçus de l'entrée d'horloge (11) dudit au moins un sous-circuit (10);
- un jeu de deux bornes de sortie (212a, 212b) respectivement pour un premier et un deuxième signal d'horloge de sortie transmis à la sortie d'horloge (12) dudit au moins un sous-circuit (10);
- des moyens de détection (223, 224) pour détecter la survenue d'un premier front dans le premier signal d'horloge d'entrée et la survenue d'un deuxième front dans le deuxième signal d'horloge d'entrée, les premier et deuxième fronts étant du même type, montant ou descendant,
- des moyens de génération d'impulsions (231, 241, 242) pour générer un front montant dans le premier signal d'horloge de sortie et un front descendant dans le deuxième signal d'horloge de sortie en réponse à la détection de la survenue du premier front et pour générer un front descendant dans le premier signal d'horloge de sortie et un front montant dans le deuxième signal d'horloge de sortie en réponse à la détection de la survenue du deuxième front.

2. Agencement de circuit suivant la revendication 1, caractérisé en ce que les moyens de génération d'impulsions (231, 241, 242) comprennent une bascule (231), les moyens de génération d'impulsions (231, 241, 242) étant agencés pour initialiser et réinitialiser ladite bascule (231) en réponse à la détection de la survenue respective des premier et deuxième fronts, les sorties complémentaires de ladite bascule (231) étant couplées aux deux bornes de sortie (212a, 212b) du circuit de régénération de signal d'horloge (210).

3. Agencement de circuit suivant la revendication 1 ou 2, caractérisé en ce que la pluralité des sous-circuits forme une chaîne de sous-circuits de traitement de données (10, 20), chaque sous-circuit de la chaîne comprenant une sortie de données (14, 24) couplée à une entrée de données (23, 33) d'un sous-circuit suivant (20, 30) et chaque sous-circuit de la chaîne (10, 20) comprenant une sortie d'horloge (12, 22) couplée à une entrée d'horloge (21, 31) du sous-circuit suivant.

4. Agencement de circuit suivant la revendication 1, caractérisé en ce que ledit au moins un sous-circuit (323), les moyens de détection et les moyens de génération d'impulsions sont intégrés sur une seule puce semi-conductrice à circuit intégré (320).

5. Agencement de circuit suivant la revendication 4, caractérisé en ce qu'une pluralité de sous-circuits (314, 318, 322) et de circuits de régénération de signal d'horloge (312, 316, 320) sont intégrés sur un seul circuit intégré (310).

6. Circuit intégré approprié pour être utilisé dans un agencement de circuit suivant l'une quelconque des revendications 1 à 5, le circuit intégré comprenant ledit au moins un sous-circuit pour le traitement de données, les moyens de détection et les moyens de génération d'impulsions.

FIG.1

FIG.2

FIG.3

FIG.4

FIG.5

FIG.6

FIG.7